(19) Europäisches Patentamt
European Patent Office
Office européen des brevets

(11) **EP 4 262 075 A1**

(12) **EUROPEAN PATENT APPLICATION**

(43) Date of publication:
**18.10.2023 Bulletin 2023/42**

(21) Application number: **23167061.3**

(22) Date of filing: **06.04.2023**

(51) International Patent Classification (IPC):
**H02M 3/158** (2006.01)          **H02M 3/07** (2006.01)

(52) Cooperative Patent Classification (CPC):
**H02M 3/158; H02M 3/071; H02M 3/1584**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.04.2022 IN 202211021616**

(71) Applicant: **Hamilton Sundstrand Corporation**
**Charlotte, NC 28217-4578 (US)**

(72) Inventors:
• **SOMANI, Vaibhav Kumar**
  **560087 Bangalore (IN)**
• **HANUMAN, Kumbha Veera**
  **523184 Prakasam (IN)**

(74) Representative: **Dehns**
**St. Bride's House**
**10 Salisbury Square**
**London EC4Y 8JD (GB)**

(54) **DC TO DC CONVERTER WITH IMPROVED DUTY RATIO AND CONFIGURABLE OUTPUT POLARITY**

(57)     A DC to DC converter (100) includes an input (203) configured to receive a DC input voltage, an output (Vout) and two serially connected capacitors (C1, C2) connected across the output. The two serially connected capacitors include a first capacitor and a second capacitor connected together at a connection node (233). The converter also includes a first parallel converter (230) connected between the input and the connection node, a second parallel converter (232) connected between the input and the connection and in parallel with the fist parallel converter, and a controller (210) that selectively connects the first and second parallel converters to the input based on a desired magnitude and polarity of a voltage at the output.

FIG. 2

**Description**

CROSS-REFERENCE TO RELATED APPLICATIONS

This application claims priority to Indian Patent Application No. 202211021616 filed April 11, 2022.

BACKGROUND

The present disclosure relates generally to power converters and, in particular, to DC to DC converters.

Switched mode DC to DC converter power supplies are widely used to convert power from a source, such as mains power, to DC power supply for electronic devices.

Modem embedded control systems require power rails voltage as low as 1V. In aerospace or in any domain a typical standard voltage available is 28V (or 48V). So for point of load (PoL) an efficient DC-DC converter is needed to step-down the 28V (or 48V) to 1V. Also, another requirement may be that the DC to DC converter to provide both positive and negative voltage outputs (bipolar topology).

To achieve the large step-down gain and bipolar topology, the conventional/basic dc-dc converters have to operate at an extreme duty cycle (less than 0.1) and this results to a required control circuit that is fast and, thus, expensive.

SUMMARY

According to one embodiment a DC to DC converter is disclosed. The converter includes an input configured to receive a DC input voltage, an output and two serially connected capacitors connected across the output. The two serially connected capacitors include a first capacitor and a second capacitor connected together at a connection node. The converter also includes a first parallel converter connected between the input and the connection node, a second parallel converter connected between the input and the connection and in parallel with the fist parallel converter, and a controller that selectively connects the first and second parallel converters to the input based on a desired magnitude and polarity of a voltage at the output.

In addition to one or more of the features described above, or as an alternative to any of the foregoing embodiments, the first parallel converter is connected to the input for a first duty cycle (D1) that is a portion of a preselected time period (T) and the second parallel converter is connected to the input for a second duty cycle (D2) that is a portion of the preselected time period (T).

In addition to one or more of the features described above, or as an alternative to any of the foregoing embodiments, the voltage at the output is positive when D2 is greater than D1 and negative when D2 is less than D1.

In addition to one or more of the features described above, or as an alternative to any of the foregoing embodiments, the first parallel converter includes a first switch and first inductor connected in series between the input and the connection node.

In addition to one or more of the features described above, or as an alternative to any of the foregoing embodiments, the second parallel converter includes a third switch and second inductor connected in series between the input and the connection node.

In addition to one or more of the features described above, or as an alternative to any of the foregoing embodiments, the converter can further include: a second switch connected between an output of the first switch and first output terminal of the output; and a fourth switch connected between an output of the third switch and a second output terminal of the output.

In addition to one or more of the features described above, or as an alternative to any of the foregoing embodiments, when a positive output is desired at the output, the controller causes the converter to operate in three states; when in a first state of the three states, the first and third switches are conductive and the second and fourth switches are open; when in a second state of the three states, the first and fourth switches are open and the second and third switches are conductive; and when in a third state of the three states, the first and third switches are open and the second and fourth switches are conductive.

In addition to one or more of the features described above, or as an alternative to any of the foregoing embodiments, when a negative output is desired at the output, the controller causes the converter to operate in three states: when in a first state of the three states, the first and third switches are conductive and the second and fourth switches are open; when in a second state of the three states, the first and fourth switches are conductive and the second and third switches are open; and when in a third state of the three states, the first and third switches are open and the second and fourth switches are conductive.

Also disclosed is a method of operating a converter of any prior embodiment. The method includes determining a polarity and a magnitude of a desired output at the output; selecting a value of D2 that is above or below 50% based on the polarity; determining Vo2 across the second capacitor based on the selected value of D2; determining Vo1 based on the magnitude and Vo2; determining D1 based on the Vo1; and utilizing the controller to selectively open and close the first, second, third and fourth switches based on D1 and D2 and the polarity.

In addition to one or more of the methods described above, or as an alternative to any of the foregoing embodiments, when the polarity is positive the controller causes the converter to operate in three states; wherein in a first state of the three states, the first and third switches are conductive and the second and fourth switches are open; wherein in a second state of the three states, the first and fourth switches are open and the second and third switches are conductive; and wherein in a third state of the three states, the first and third switches are open and the second and fourth switches are conductive.

In addition to one or more of the methods described above, or as an alternative to any of the foregoing embodiments, the controller causes the converter to be in the first state for a time period equal to D1*T.

In addition to one or more of the methods described above, or as an alternative to any of the foregoing embodiments, the controller causes the converter to be in the first state and second states for a combined time period equal to D2*T.

In addition to one or more of the methods described above, or as an alternative to any of the foregoing embodiments, when the polarity is negative the controller causes the converter to operate in three states; wherein in a first state of the three states, the first and third switches are conductive and the second and fourth switches are open; wherein in a second state of the three states, the first and fourth switches are conductive and the second and third switches are open; and wherein in a third state of the three states, the first and third switches are open and the second and fourth switches are conductive.

In addition to one or more of the methods described above, or as an alternative to any of the foregoing embodiments, wherein the controller causes the converter to be in the first state for a time period equal to D2*T.

In addition to one or more of the methods described above, or as an alternative to any of the foregoing embodiments, the controller causes the converter to be in the first state and second states for a combined time period equal to D 1 *T.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description.

BRIEF DESCRIPTION OF THE DRAWINGS

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings, in which:

FIG. 1 depicts an example of an aircraft with controller and electrical power systems in accordance with an exemplary embodiment;

FIG. 2 depicts a simplified schematic diagram of an embodiment of a DC to DC power converter according to one embodiment;

FIG. 3 depicts the power converter of FIG. 2, in a first state;

FIG. 4 depicts the power converter of FIG. 2, in an example second state where a positive output is desired (D2 > D1);

FIG. 5 depicts the power converter of FIG. 2, in an alternative example second state where a negative output is desired (D 1 > D2);

FIG. 6 depicts the power converter of FIG. 2 in third stated where neither portion of the converter is connected an input (Vdc); and

FIG. 7 shows an example method of selecting D 1 and D2 according to one embodiment.

DETAILED DESCRIPTION

For the purposes of promoting an understanding of the principles of the present disclosure, reference will now be made to the embodiments illustrated in the drawings, and specific language will be used to describe the same. It should nevertheless be understood that no limitation of the scope of this disclosure is thereby intended. The following description is merely illustrative in nature and is not intended to limit the present disclosure, its application or uses. It

EP 4 262 075 A1

should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e., one, two, three, four, etc. The terms "a plurality" are understood to include any integer number greater than or equal to two, i.e., two, three, four, five, etc. The term "connection" can include an indirect "connection" and/or a direct "connection" unless specified to the contrary in the claims below.

In general, embodiments herein relate to an application of a dc-dc converter technique that can provide both positive and negative polarity outputs.

The described embodiments are explained with respect to an example of step-down (buck) DC-DC converters. In one embodiment, a circuit architecture is provided that may achieve better duty cycle performance with vector sum output technique. The proposed topology consists of 4 switches, 2 inductors, and 2 output capacitors). The switches are arranged to allow for the circuit to arrange such that it can provide a combination of two parallel converters that, receptively, operate on duty cycles D1 & D2.

Further, in one embodiment, based on the ratio of D1 and D2, the output terminal can be configured for both positive and negative output voltages. For positive output voltage (VOUT) the duty cycles should be D2 > D1. For negative output voltage (VOUT) the duty cycles should be D1 > D2.

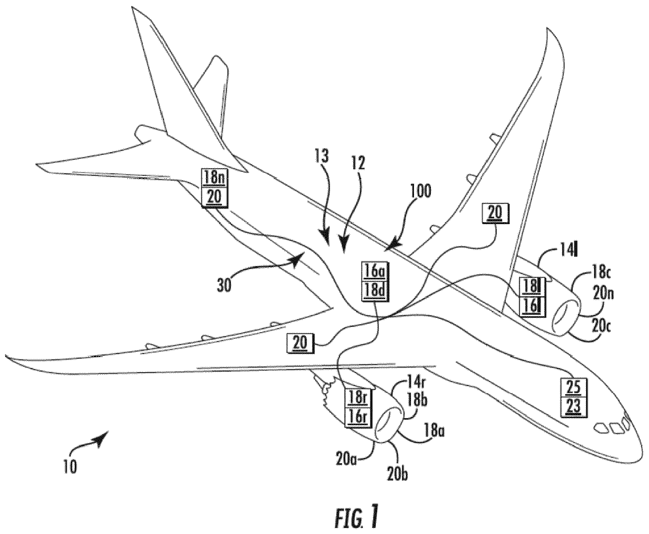

Referring to FIG. 1, an aircraft 10 is shown. Aircraft 10 includes one or more control systems shown generally as 12. The control system 12 may include a power system 13 that interconnects with one or more controllers referred to generally as 16 and more specifically as 16l, 16r commonly located at or near each engine 14l, 14r. Other controllers 16 are also be depicted in this instance as 16a, 16b, and the like. In the described embodiments, the reference numerals are annotated with an "l" or "r" to denote the left or right side of the aircraft 10, respectively, for the purpose of simplicity of description. Likewise, the annotation "a", "b", ... "n" is employed to simplify designation of a multiple enumeration of a component or element.

Each of the controllers 16 may be configured to receive various sensor signals from sensors referred to generally as 18 and individually as 18a, 18b, ... 18n all over the aircraft 10 and may also operate one or more actuators shown generally as 20, and more specifically as 20a, 20b, 20c, ...20n to control the operation of the engines 14r, 14l, flight controls, (not shown), power systems 13 and the like. The control system 12 and power system 13 may also be operably connected to various other components throughout the aircraft 10, including, but not limited to other controllers 16, control panels 23, displays 25, and the like. Some controllers 16 e.g., 16a may also be configured to receive power from various aircraft sources, e.g., generators, batteries and the like and distribute power as needed to various systems in the aircraft 10.

The power system 13 may be part of a controller 16. In yet another embodiment, the configuration could be the opposite with the controller 16 operating as or providing a portion of the power system 13, as illustrated by the general depiction of 16a and described further herein.

In an embodiment, the power system 13 incudes a power supply or converter 100 hereinafter referred to as a power supply 100 as described herein for receiving power from a bus system, converting and routing power to various components in the aircraft 10. In one embodiment, and as described by way of example herein, the power supply 100 is a DC to DC converter. It shall be understood that the power supply 100 includes an input that can be connected to, for example, a DC bus that provide a relatively high level voltage (e.g., 28/48V) and steps that voltage down to a much lower voltage (e.g., 1V).

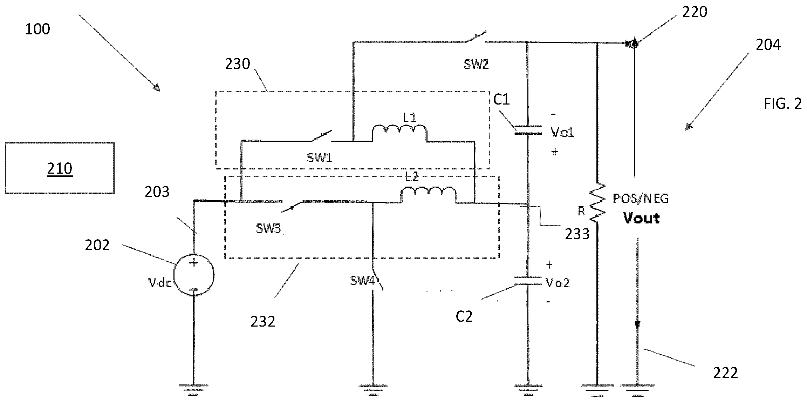

With reference now to FIG. 2, an example of a DC to DC converter/power supply 100 is illustrate. Herein, the DC to DC converter/power supply 100 may be referred to as a converter 100 for brevity. The particular arrangement of circuit elements switches (SW1-SW4) and the current shaping elements (R, C1/C2 and L1/L2) are illustrative and modifications could be made. For example, R could be formed by a combination of resistors connected in series or parallel. Similarly, C1/C2 and could be formed by a combination of capacitors/inductors as will be understood by the skilled artisan. In addition, a capacitor could be coupled across the output (in parallel with R) to smooth the output.

The converter 100 include an DC input 203. The input 203 can be connected to a DC voltage source 202 labelled as Vdc herein. The source could be any source and, in one embodiment, is a DC bus of an aircraft. Vdc can be in the range of 28-48V in one embodiment.

The converter 100 also includes an output 204. The output 204 is labelled as Vout in FIG. 2 and is shown as being provided across an output resistor R. The output voltage Vout can be in the range of 1-4V in one embodiment. The magnitude of the output voltage Vout can be based on a ratio of operating times (duty cycle) in the parallel converters 230, 232 of the converter 100. The duty cycle of the first and second modes shall be referred as D1 and D2, respectively

4

herein.

In the below it shall be assumed that for a certain time period T, the portion of that time period T is which power is provided from the input 202 to either the first or second converters 230, 232 (e.g., through L1/L2) defines the duty cycle. It shall be understood that T is defined as the time it takes to transfer through all three of the states discussed below.

As will be understood more fully from the below, Vout can have a positive or negative value based on with the relative duty cycles of the two different operating modes of the converter 100. That is, when D1 is greater than D2, Vout is negative and when D1 is less than D2, Vout is positive. This is due to relative stored energy in the first and second inductors L1/L2 that are allowed to dissipate in C1/C2 as described below.

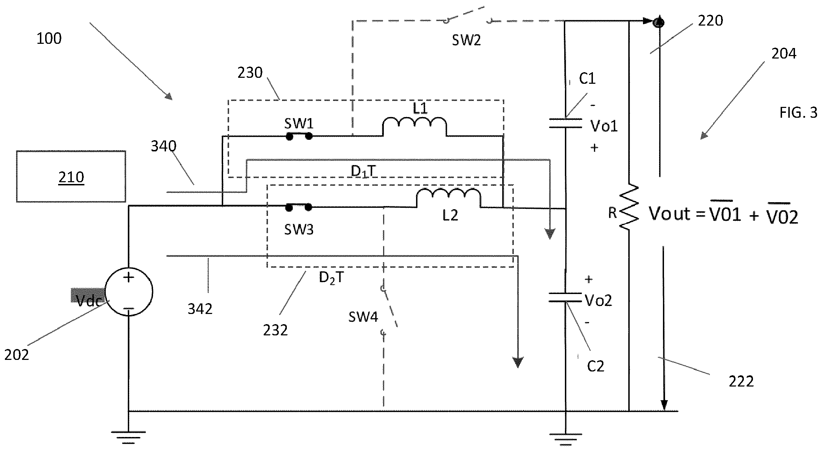

For completeness certain connections between the elements between the elements of the converter 100 will now be detailed. The operation of the converter 100 will then be explained with reference to FIGs. 3 to 6 which show the different states/configurations of the converter 100.

C1 and C2 are serially connected across the output Vout. In particular, C1 and C2 are serially connected are connected between output terminals 220, 222. As shown, output terminal 222 is connected to ground. The output resistor R is connected in parallel with the serially connected capacitors C1, C2. Thus, C1/C2 and R are shown as being connected between output terminal 220 and ground 222. C1 and C2 are connected to one another at a connection node 233. C1 is connected between output terminal 220 and the connection node 233 and C2 is connected between the connection node 233 and output terminal 222 (e.g., ground).

The states are selected based on the open/closed position of switches SW1-SW4. Herein, a switch is closed is if passes current and open if it does not. The switches SW1-SW4 can be any type of switch. In one embodiment, the switches SW1-SW4 are transistors. The switches SW1-SW4 can be controlled by a controller 210. While the connections between the controller 210 and switches SW1-SW4 are not shown, the skilled artisan will understand that the controller 210 can transmit a signal to the switches SW1-SW4 that causes them to open or close. In particular, the controller will cause the converter 100 to begin in a first state where both L1 and L2 are connected to input and then transfer into one of two different second states depending on the desired output polarity. In one of the two second states, the L1 is connected to input 203 and L2 is not and the opposite is true in the other second state. Regardless, the converter then moves into a third state where neither L1 nor L2 is connected to the input. In a specific example the converter 100 will be in the third state about 50% of the time.

As shown in FIG. 2, both switches SW1 and SW3 are electrically coupled to the input 202. As shown the switches SW1 and SW3 include a switch input that is coupled to the input 202. Both switches SW1 and SW3 also include a switch output. For context, when closed, current flows from the switch input to the switches SW1 and SW3 to their respectively output sides. The output sides of the switches SW1 and SW3 are respectively coupled the first and second inductors L1, L2. A first end of the first inductor L1 is connected to the switch output of the first switch SW1. A first end of the second inductorL2 is connected to the switch output of the third switch SW3. The second ends of the first and second inductors L1, L2 are connected together and connected to the connection node 233. The second ends of the first and second inductors L1, L2 are both connected to ground through second capacitor C2.

The second switch SW2 is connected between the switch output of the first switch SW1 and the output 220. In particular, the input of the second switch SW2 is connected to the switch output of the first switch SW1 and the output of the second switch SW2 is connected to the output 220. As such, the output of the second switch SW2 is also connected to the first capacitor C 1. The fourth switch SW4 is connected to the switch output of the third switch SW3.

With reference now to FIG. 3, the circuit 100 is shown in a first state where SW1 and SW3 are closed and SW2 and SW4 are open. This allows for both inductors L1 & L2 to be connected in parallel and stores energy for a periods D1T and D2T, respectively, through an output capacitor Co2 as shown FIG. 3. The current paths are shown in such states as paths 340, 342 in FIG. 3. An explanation of how D1 and D2 can be selected is provided below. It shall be understood that during $D_1{}^*T$ period the voltage across the inductor L1 equals:

$$V_{L1} = V_{dc} - V_{o2} \ldots\ldots\ldots\ldots\ldots (1)$$

and during $D_2{}^*T$ period the voltage across the inductor L2 equal:

$$V_{L2} = V_{dc} - V_{o2} \ldots\ldots\ldots\ldots\ldots (2)$$

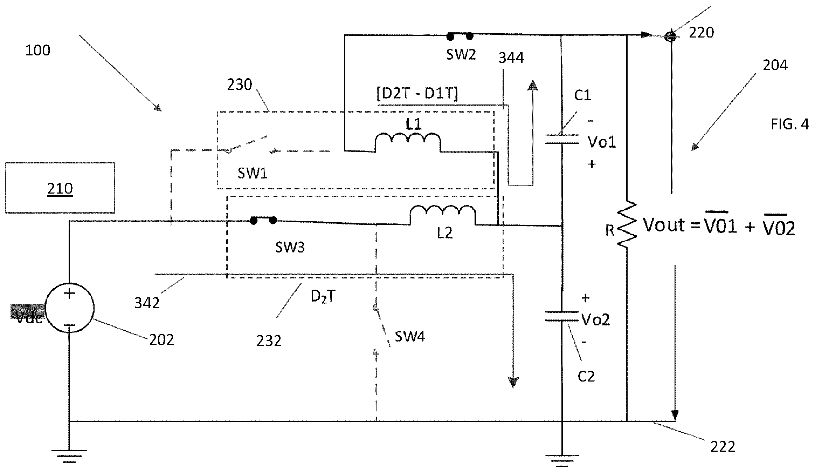

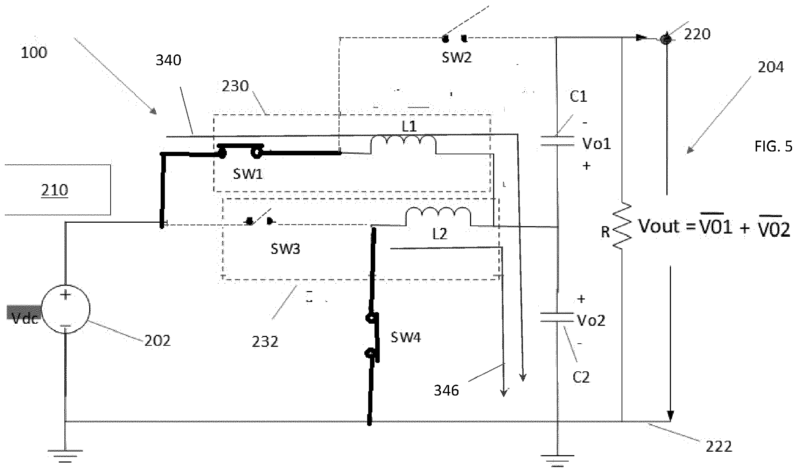

In all cases herein, both SW1 and SW3 are closed in this first state. To vary D1 and D2 to set Vout either positive or negative, one switch is allowed to remain closed in the second state and the other opened. The two different variations of the second state are shown in FIGs. 4 and 5. In short, in the second state for a negative voltage, D1 is greater than D2 and thus, SW1 is closed and SW3 is open and for a positive voltage D2 is greater than D1 and SW1 is open and SW3 is closed.

For example, consider FIG. 4 which shows the configuration for D2 greater than D1, SW1 is opened and SW3 remains closed. During this second state, SW2 is closed which allows L1 to be connected in parallel with and releases its energy into C1 (path 344).

Alternatively, as shown in FIG. 5, the if D1 is greater than D2 (negative voltage desired at output 204) SW3 can be opened and SW4 closed allowing L2 to discharge C2 (path 346). This will provide for a longer time to store energy in L1 as compared to L2.

Regardless of desired output level/polarity, in the third state both L1 and L2 are disconnected from the input 202 and allowed to discharge through their respective capacitors. As Vout is the sum of Vo1 and Vo2, which ever inductor L1/L2 was connected longer will dominate the output and determine the polarity. The difference in time will establish the magnitude but for small output voltages (assuming relatively similar component values) the difference between D1 and D2 should be relatively small.

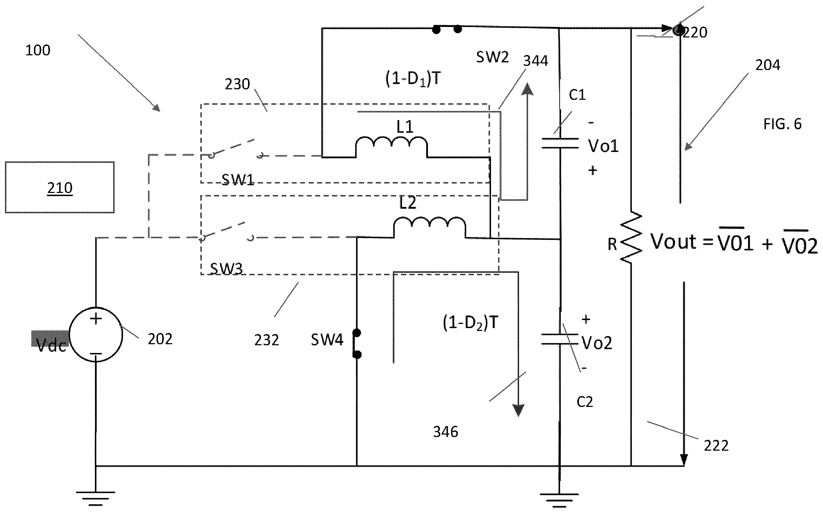

Regardless of whether D1 or D2 is greater, in a third state (FIG. 6) switch SW1 and SW3 are opened (turn OFF) and, SW2 and SW4 are closed (turned on). In this state, inductor L2 connected in parallel with capacitor C2 and release its energy through it and produces a positive voltage Vo2 across C2. In upper converter section 230 the switch SW2 is closed state and the inductor L1 release its energy through capacitor C1 and generates a negative voltage Vo1 across Co1. During $(1-D_1)^*T$ period the voltage across the inductor L1 is:

$$V_{L1} = V_{o1} \dots\dots\dots\dots\dots \text{ (3)};$$

and during $(1-D_2)^*T$ period the voltage across the inductor L2 is:

$$V_{L2} = -V_{o2} \dots\dots\dots\dots\dots\dots \text{ (4)}$$

As discussed above, the output voltage (Vout) is vector sum of Vo1 and Vo2 as shown in FIGs. 3-6. If the magnitude of voltage Vo1 < Vo2 and corresponding duty cycles are $D_1 < D_2$ then the resultant of Vout will be positive and similarly if Vo1 > Vo2 and corresponding duty cycles are $D_1 > D_2$ then the resultant Vout will be negative.

The state of the switches can be summarized in Tables 1 and 2 below. In these tables "off" refers to an open or non-conductive switch and "on" refers to a closed or conductive switch. Table 1 is used when a positive output is desired and Table 2 is used when a negative output is desired. The switching can be handled by logic in the controller 210.

Table 1 (D1<D2; Positive output voltage)

| State\Switch | SW1 | SW2 | SW3 | SW4 |
|---|---|---|---|---|
| STATE 1 | ON | OFF | ON | OFF |
| STATE 2 | OFF | ON | ON | OFF |
| STATE 3 | OFF | ON | OFF | ON |

Table 2 (D2<D1; negative output voltage)

| State\Switch | SW1 | SW2 | SW3 | SW4 |
|---|---|---|---|---|
| STATE 1 | ON | OFF | ON | OFF |
| STATE 2 | ON | OFF | OFF | ON |
| STATE 3 | OFF | ON | OFF | ON |

The above description gives the configurations that can be utilized to generate desired outputs. The following description provides further explanation of various parameters during operation.

The combination of SW3, SW4, L2 and C2 is similar to buck converter. Applying the volt-sec balance equation for inductor L2 using eq. (2) & (4) yields:

$$(V_{dc} - V_{o2})D_2T - V_{02}(1 - D_2)T = 0$$

$$V_{02} = D_2 * V_{dc} \dots\dots\dots\dots\dots (5)$$

Similarly applying the volt-sec balance equation for inductor L1 using eq. (1) & (3) yields:

$$(V_{dc} - V_{o2})D_1 T + V_{01}(1 - D_1)T = 0 \dots\dots (6)$$

Solving equations (5) & (6) yields:

$$V_{01} = -\frac{(1-D_2)}{(1-D_1)} * D_1 * V_{dc} \dots\dots (7)$$

As discussed above, the output voltage (Vout) is vector sum of Vo1 and Vo2 as shown FIG. 2-6.

$$\text{Vout} = \overline{V01} + \overline{V02} \qquad \dots\dots(8)$$

Substituting Vout into equations (5) & (6) yields:

$$V_{out} = -\frac{(1-D_2)}{(1-D_1)} * D_1 * V_{dc} + D_2 * V_{dc} \dots\dots(9)$$

Simplifying results in

$$V_{OUT} = \frac{D2-D1}{1-D1} * V_{dc} \dots\dots (10)$$

Given the above discussion, now presented is a method to determine when to switch from various states to get the desired volage output and polarity.

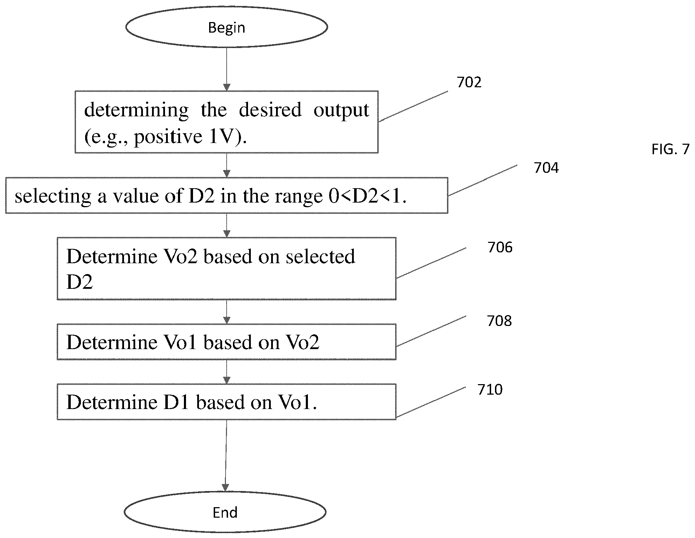

An example of such method is shown in FIG. 7. At block 702 the method includes determining the desired output. For this example, assume a positive 1 V output is desired based on a 48V Vdc. It is known based on the disclosure herein that D2 will be greater than D1.

As indicated at block 704, as the this can include selecting a value of D2 in the range 0<D2<1. To ensure Vout is positive, D2 can be selected to be at least 0.5 but could be larger. For simplicity, assume D2 equals 0.5. With this assumption, Vo2 is 24V per equation (5) above and as indicated by block 706.

As indicated at block 708, after Vo2 is known, Vo1 can be calculated from equation (8) and will equal -23V in this case. After Vo1 is known, D1 can be calculated at block 710 from equation (7) above and will equal 0.489 (e.g., .49) in this example.

This can be translated in operation commands as follows: for a given time period T, the converter will be configured in the state 1 (either table) for 49% of the time and then switch to the configuration of state 2 in Table 1 for the 1% of the time before switching to state 3 for the remainder of T. This means that for most of the time both parallel converters 230, 232 are connected to the input and the variation in magnitude and polarity of the output is based on the amount of time when in the second state. Stated differently, most of the time portion of connection of the parallel converters 230, 232 runs simultaneously. Thus, the method can also include having the controller selectively open and close SW1, SW2, SW3, SW4 based on D1 and D2 and the polarity (with polarity determining which of tables 1 or table 2 to select).

In a positive polarity case this will mean that the controller causes the converter to be in the first state for a time period equal to D1*T and causes the converter to be in the first state and second states for a combined time period equal to D2*T.

Similarly, in a negative polarity case this will mean that the controller causes the converter to be in the first state for a time period equal to D2*T and causes the converter to be in the first state and second states for a combined time period equal to DP*T.

The skilled artisan will realize that after being determined, the controller 210 can then cause the above operations to happen by opening and closing the switches based on the tables above.

Herein, the output is a vector sum of a positive and negative voltage. A desired output with either polarity can be generated by controlling the voltage across two output capacitors. This allows for the generation of an output voltage at comparatively higher duty cycle of control signal. For example, 48V to 1V conversion requires 2.08% duty cycle in case of a prior art buck converter, but in proposed solution it is close to ~50% duty cycle. Further, the circuit herein can be operated at a flexible/desired duty cycle for any level of conversion and by choosing either table 1 or table 2, a positive or negative output can be achieved.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more features, integers, steps, operations, element components, and/or groups thereof. For the purposes of this disclosure, it is further understood that the terms "inboard" and "outboard" can be used interchangeably, unless context dictates otherwise.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

**Claims**

1. A DC to DC converter (100), the converter comprising:

   an input (203) configured to receive a DC input voltage;
   an output (Vout);
   two serially connected capacitors (C1, C2) connected across the output, the two serially connected capacitors including a first capacitor and a second capacitor connected together at a connection node (233);
   a first parallel converter (230) connected between the input and the connection node;
   a second parallel converter (232) connected between the input and the connection and in parallel with the fist parallel converter; and
   a controller (210) that selectively connects the first and second parallel converters to the input based on a desired magnitude and polarity of a voltage at the output.

2. The converter of claim 1, wherein the first parallel converter (230) is connected to the input for a first duty cycle (D1) that is a portion of a preselected time period (T) and the second parallel converter (232) is connected to the input for a second duty cycle (D2) that is a portion of the preselected time period (T).

3. The converter of claim 2, wherein the voltage at the output is positive when D2 is greater than D1 and negative when D2 is less than D1.

4. The converter of any preceding claim, wherein the first parallel converter (230) includes a first switch (SW1) and first inductor (L1) connected in series between the input (203) and the connection node (233).

5. The converter of claim 4, wherein the second parallel converter (232) includes a third switch (SW3) and second inductor (L2) connected in series between the input (203) and the connection node (233).

6. The converter of claim 5, further comprising:

   a second switch (SW2) connected between an output of the first switch (SW1) and first output terminal (220) of the output; and
   a fourth switch (SW4) connected between an output of the third switch (SW3) and a second output terminal of the output.

7. The converter of claim 6, wherein when a positive output is desired at the output (Vout), the controller (210) causes the converter (100) to operate in three states;

wherein in a first state of the three states, the first and third switches (SW1, SW3) are conductive and the second and fourth switches (SW2, SW4) are open;

wherein in a second state of the three states, the first and fourth switches are open and the second and third switches are conductive; and

wherein in a third state of the three states, the first and third switches are open and the second and fourth switches are conductive.

8. The converter of claim 6 or 7, wherein when a negative output is desired at the output (Vout), the controller (210) causes the converter (100) to operate in three states;

wherein in a first state of the three states, the first and third switches (SW1, SW3) are conductive and the second and fourth switches (SW2, SW4) are open;

wherein in a second state of the three states, the first and fourth switches are conductive and the second and third switches are open; and

wherein in a third state of the three states, the first and third switches are open and the second and fourth switches are conductive.

9. A method of operating a converter as recited in any of claims 6 to 8, the method comprising:

determining a polarity and a magnitude of a desired output at the output (Vout);

selecting a value of D2 that is above or below 50% based on the polarity;

determining Vo2 across the second capacitor (C2) based on the selected value of D2;

determining Vo1 based on the magnitude and Vo2;

determining D1 based on the Vol; and

utilizing the controller (210) to selectively open and close the first, second, third and fourth switches (SW1, SW2, SW3, SW4) based on D1 and D2 and the polarity.

10. The method of claim 9, wherein when the polarity is positive the controller (210) causes the converter (100) to operate in three states;

wherein in a first state of the three states, the first and third switches (SW1, SW3) are conductive and the second and fourth switches (SW2, SW4) are open;

wherein in a second state of the three states, the first and fourth switches are open and the second and third switches are conductive; and

wherein in a third state of the three states, the first and third switches are open and the second and fourth switches are conductive.

11. The method of claim 9 or 10, wherein the controller (210) causes the converter (100) to be in the first state for a time period equal to D1*T.

12. The method of claim 11, wherein the controller (210) causes the converter (100) to be in the first state and second states for a combined time period equal to D2*T.

13. The method of any of claims 9 to 12, wherein when the polarity is negative the controller (210) causes the converter (100) to operate in three states;

wherein in a first state of the three states, the first and third switches (SW1, SW3) are conductive and the second and fourth switches (SW2, SW4) are open;

wherein in a second state of the three states, the first and fourth switches are conductive and the second and third switches are open; and

wherein in a third state of the three states, the first and third switches are open and the second and fourth switches are conductive.

14. The method of any of claims 9 to 13, wherein the controller causes the converter to be in the first state for a time period equal to D2*T.

15. The method of any of claims 9 to 14, wherein the controller causes the converter to be in the first state and second states for a combined time period equal to D1*T.

FIG. 1

FIG. 2

FIG. 3

$$V_{out} = \overline{V01} + \overline{V02}$$

EP 4 262 075 A1

FIG. 4

FIG. 5

EP 4 262 075 A1

FIG. 6

204

220

$V_{out} = \overline{V01} + \overline{V02}$

222

R

$V_{o1}$

C1    -    +

$V_{o2}$

+    -    C2

SW2    344

$(1-D_1)T$

L1

L2

$(1-D_2)T$

346

SW4

232

230

SW1

SW3

100

210

202

Vdc

FIG. 7

```
        ┌─────────────┐
        │    Begin    │
        └──────┬──────┘
               │
               ▼
   ┌───────────────────────────┐  ___ 702
   │ determining the desired   │
   │ output (e.g., positive 1V).│
   └───────────┬───────────────┘
               │
               ▼
 ┌─────────────────────────────────┐  ___ 704
 │ selecting a value of D2 in the  │
 │ range 0<D2<1.                   │
 └───────────┬─────────────────────┘
             │
             ▼
   ┌───────────────────────────┐  ___ 706
   │ Determine Vo2 based on     │
   │ selected D2                │
   └───────────┬───────────────┘
               │
               ▼
   ┌───────────────────────────┐  ___ 708
   │ Determine Vo1 based on Vo2 │
   └───────────┬───────────────┘
               │
               ▼
   ┌───────────────────────────┐  ___ 710
   │ Determine D1 based on Vo1. │
   └───────────┬───────────────┘
               │
               ▼
        ┌─────────────┐
        │     End     │
        └─────────────┘
```

Europäisches
Patentamt

European
Patent Office

Office européen
des brevets

**EUROPEAN SEARCH REPORT**

Application Number

EP 23 16 7061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/214848 A1 (UMETANI KAZUHIRO [JP]) 30 July 2015 (2015-07-30) * paragraphs [0025], [0091], [0184], [0186], [0189], [0193] – [0197], [0198]; figures 10,11 * | 1-15 | INV. H02M3/158 H02M3/07 |
| X | WO 2020/108759 A1 (SIEMENS AG [DE]) 4 June 2020 (2020-06-04) | 1,9 | |
| A | * page 4, lines 1-6; figures 3,4,6 * * page 16, lines 32-34 * | 2-8, 10-15 | |
| A | US 2013/320954 A1 (CAPOFREDDI PETER [US] ET AL) 5 December 2013 (2013-12-05) * paragraph [0030]; figure 6 * | 1-15 | |
| A | US 2004/070906 A1 (KOHOUT JAMES A [US] ET AL) 15 April 2004 (2004-04-15) * figure 8 * | 1-15 | |
| A | US 2021/126538 A1 (PUIA EMILIANO ALEJANDRO [DE] ET AL) 29 April 2021 (2021-04-29) * paragraph [0005]; figure 1D * | 1-15 | **TECHNICAL FIELDS SEARCHED (IPC)** H02M |
| A | US 6 297 974 B1 (GANESAN RAMKARTHIK [US] ET AL) 2 October 2001 (2001-10-02) * column 3, line 56; figures 2,6 * | 1-15 | |

The present search report has been drawn up for all claims

| Place of search | Date of completion of the search | Examiner |
|---|---|---|
| The Hague | 24 August 2023 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7061

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2023

| Patent document cited in search report | | Publication date | Patent family member(s) | | Publication date |
|---|---|---|---|---|---|
| US 2015214848 | A1 | 30-07-2015 | CN | 104821717 A | 05-08-2015 |
| | | | JP | 6213268 B2 | 18-10-2017 |
| | | | JP | 2015142482 A | 03-08-2015 |
| | | | US | 2015214848 A1 | 30-07-2015 |
| WO 2020108759 | A1 | 04-06-2020 | AU | 2018451265 A1 | 03-06-2021 |
| | | | CN | 113169680 A | 23-07-2021 |
| | | | EP | 3850745 A1 | 21-07-2021 |
| | | | US | 2022123669 A1 | 21-04-2022 |
| | | | WO | 2020108759 A1 | 04-06-2020 |
| US 2013320954 | A1 | 05-12-2013 | CN | 103457459 A | 18-12-2013 |
| | | | CN | 203377783 U | 01-01-2014 |
| | | | US | 2013320954 A1 | 05-12-2013 |
| US 2004070906 | A1 | 15-04-2004 | NONE | | |
| US 2021126538 | A1 | 29-04-2021 | NONE | | |
| US 6297974 | B1 | 02-10-2001 | AU | 6109300 A | 30-04-2001 |
| | | | CN | 1399811 A | 26-02-2003 |
| | | | JP | 2003511003 A | 18-03-2003 |
| | | | KR | 20020038773 A | 23-05-2002 |
| | | | TW | 473786 B | 21-01-2002 |
| | | | US | 6297974 B1 | 02-10-2001 |
| | | | US | RE41217 E | 13-04-2010 |
| | | | WO | 0124348 A1 | 05-04-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202211021616